# EUROPEAN PATENT SPECIFICATION

(11) **EP 4 760 575 B1**
(45) Date of publication and mention of the grant of the patent: **21.10.2026**
(21) Application number: 25218425.4
(22) Date of filing: 25.11.2025
(51) Int. Cl.: G06F 21/62, H04L 9/40

(54) **METHOD AND SYSTEM FOR UNIFIED IDENTITY MANAGEMENT IN MULTI-CLOUD ENVIRONMENT**
VERFAHREN UND SYSTEM ZUR EINHEITLICHEN IDENTITÄTSVERWALTUNG IN EINER MULTI-CLOUD-UMGEBUNG
PROCÉDÉ ET SYSTÈME DE GESTION D'IDENTITÉ UNIFIÉE DANS UN ENVIRONNEMENT MULTI-NUAGES

(30) Priority: 12.12.2024 IN 202421098313
(43) Date of publication of application: 17.06.2026
(73) Proprietor: Tata Consultancy Services Limited, Maharashtra (IN)
(72) Inventor: PRAKASH, Vakkalagadda Satya Sai, 500034 Hyderabad, Telangana (IN); SINGH DILIP THAKUR, Meena, 560066 Bangalore, Karnataka (IN); GOPU, Srinivas Reddy, 500034 Hyderabad, Telangana (IN); BHATTACHAR, Rajan Mindigal Alasingara, 560066 Bangalore, Karnataka (IN)
(74) Representative: Goddar, Heinz J.

(56) References cited:
- US-A1- 2020 036 515
- US-B1- 10 091 230

## Description

### CROSS-REFERENCE TO RELATED APPLICATIONS AND PRIORITY

The present application claims priority to Indian application no. 202421098313 filed on December 12, 2024.

### TECHNICAL FIELD

The disclosure herein generally relates to the field of machine learning and, more particularly, to a method and system for unified identity management in multi-cloud environment.

### BACKGROUND

A multi-cloud environment includes multiple Cloud Service Providers (CSPs) and allows cloud environments to be private, public, or a combination of both. The primary goal of a multi-cloud strategy is to provide flexibility, optimum performance, control cost and avoid vendor lock-in by choosing multiple CSPs. Enterprises having onboarded their resources into multiple clouds often have to use a third-party identity manager service that hosts their own version of login and other routines. These solutions often require users and administrators of the business to move into the active identity manager system by way of on boarding or administrative transfer works.

Another major challenge enterprises are facing is migrating to multi cloud setup, due to heterogeneity in the Identity and Access Management (IAM). As a result, a common view of the user profile among various CSP is a difficult task. For example, when an enterprise hosts applications among multiple clouds, the identity can access multiple applications at multiple CSPs. The consolidated view of the identities is needed to solve the problem of identity silos. The access pattern might give insights of the access sprawl and other issues which can be regularly monitored. For example, adversaries can do impersonation as a service account performs some actions in each cloud or across cloud to attack and get a consolidated view. Based on the access pattern, repudiation by virtue of revocation of privileges as a corrective action can be taken. Hence, a common view of or a multi cloud identity is crucial part of the system in terms of information security too.

In conventional approaches, users are requested to onboard manually onto third-party solutions and are then monitored based on the account details provided by them which need human intervention and is error prone. Hence there is a need for a unified adaptive IAM system capable of providing identity access management without human intervention. US10091230B1 discloses a method for aggregating and using user identity data includes collecting user identity attributes from multiple service providers, including provider-generated risk scores associated with user access attempts, aggregating the collected data into a user-authorized and securely maintained global profile, optionally normalizing disparate data formats and combining risk scores into a global normalized risk score, distributing user-authorized portions of the global profile to selected trusted risk engines based on user permissions, requests, or event conditions, and using the distributed global profile in subsequent risk assessments to determine whether to prevent access to secure resources when a calculated risk score exceeds a predetermined threshold. US2020036515A1 discloses a method for calculating and using decentralized identity confidence scores includes calculating, by multiple decentralized identity providers, an identity confidence score for an identity; storing the calculated scores on a blockchain; retrieving the stored scores from the blockchain; and providing the score to a computer-based requestor that performs an action based on the score, such as providing a service or data, wherein the provided score may be an aggregated identity confidence score derived from multiple providers, the aggregation being computed using one or more of a knowledge graph that models confidence scores of actors that use, update, or commit the scores to the blockchain and a machine learning system employing a recursive model, with equivalent functionality implemented via a computer program product or computer system and optionally delivered as a cloud-based service.

### SUMMARY

Embodiments of the present disclosure present technological improvements as solutions to one or more of the above-mentioned technical problems recognized by the inventors in conventional systems. For example, in one embodiment, a method for unified identity management in multi-cloud environment (LLMs) is provided. The method includes receiving a plurality of identity attributes pertaining to a plurality of Cloud Service Providers (CSPs) associated with a heterogeneous multi-cloud environment. Further, the method includes generating, by the one or more hardware processors, an identity schema pertaining to each of the plurality of CSPs based on the associated plurality of identity attributes using an encoding technique. Furthermore, the method includes identifying, by the one or more hardware processors, a plurality of attribute sets pertaining to each of the plurality of CSPs based on the generated identity schema, a plurality of policies, a plurality of permissions and a plurality of resources associated with the heterogeneous multi-cloud environment. Furthermore, the method includes classifying, by the one or more hardware processors, the plurality of attribute sets pertaining to each of the plurality of CSPs into one of a) a plurality of Personally Identifiable Information (PII) parameters b) a plurality of cryptographic and security parameters and c) a plurality of technical parameters based on a plurality of privacy metrics using a trained self-learning model. Furthermore, the method includes generating, by the one or more hardware processors, a plurality of global attribute sets by mapping the classified plurality of attribute sets pertaining to each of the plurality of CSPs using one of (i) a predefined local global mapping templates and (ii) a mapping provided by the trained self- learning model. Furthermore, the method includes generating, by the one or more hardware processors, a plurality of merged identity tuples by combining the plurality of global attribute sets in a plurality of combinations, wherein each attribute from among the plurality of global attribute sets is associated with a privacy-based weight, wherein the privacy-based weight is determined using the trained self-learning model and updated whenever there is a change in cloud information. Furthermore, the method includes computing, by the one or more hardware processors, a weighted sum-based confidence score associated with each of the plurality of merged identity tuples, wherein the weighted sum-based confidence score and the plurality of merged tuples are re-evaluated dynamically whenever there is any changes in at least one of (i) the identity information (ii) attribute privacy weights and (iii) the attributes. Finally, the method includes identifying, by the one or more hardware processors, an optimal plurality of merged identity tuples from among the plurality of merged identity tuples pertaining to each of the plurality of CSPs for unified identity access management based on the associated weighted sum-based confidence score.

In another aspect, a system for unified identity management in multi-cloud environment is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a plurality of identity attributes pertaining to a plurality of Cloud Service Providers (CSPs) associated with a heterogeneous multi-cloud environment. Further, the one or more hardware processors are configured by the programmed instructions to generate an identity schema pertaining to each of the plurality of CSPs based on the associated plurality of identity attributes using an encoding technique. Furthermore, the one or more hardware processors are configured by the programmed instructions to identify a plurality of attribute sets pertaining to each of the plurality of CSPs based on the generated identity schema, a plurality of policies, a plurality of permissions and a plurality of resources associated with the heterogeneous multi-cloud environment. Furthermore, the one or more hardware processors are configured by the programmed instructions to classify the plurality of attribute sets pertaining to each of the plurality of CSPs into one of a) a plurality of Personally Identifiable Information (PII) parameters b) a plurality of cryptographic and security parameters and c) a plurality of technical parameters based on a plurality of privacy metrics using a trained self-learning model. Furthermore, the one or more hardware processors are configured by the programmed instructions to generate a plurality of global attribute sets by mapping the classified plurality of attribute sets pertaining to each of the plurality of CSPs using one of (i) a predefined local global mapping templates and (ii) a mapping provided by the trained self- learning model. Furthermore, the one or more hardware processors are configured by the programmed instructions to generates, a plurality of merged identity tuples by combining the plurality of global attribute sets in a plurality of combinations, wherein each attribute from among the plurality of global attribute sets is associated with a privacy-based weight, wherein the privacy-based weight is determined using the trained self-learning model and updated whenever there is a change in cloud information. Furthermore, the one or more hardware processors are configured by the programmed instructions to compute, a weighted sum-based confidence score associated with each of the plurality of merged identity tuples, wherein the weighted sum-based confidence score and the plurality of merged tuples are re-evaluated dynamically whenever there is any changes in at least one of (i) the identity information (ii) attribute privacy weights and (iii) the attributes. Finally, the one or more hardware processors are configured by the programmed instructions to identify an optimal plurality of merged identity tuples from among the plurality of merged identity tuples pertaining to each of the plurality of CSPs for unified identity access management based on the associated weighted sum-based confidence score.

In yet another aspect, a computer program product including a non-transitory computer-readable medium embodied therein a computer program for unified identity management in multi-cloud environment is provided. The computer readable program, when executed on a computing device, causes the computing device to receive a plurality of identity attributes pertaining to a plurality of Cloud Service Providers (CSPs) associated with a heterogeneous multi-cloud environment. Further, the computer readable program, when executed on a computing device, causes the computing device to generate an identity schema pertaining to each of the plurality of CSPs based on the associated plurality of identity attributes using an encoding technique. Furthermore, the computer readable program, when executed on a computing device, causes the computing device to identify a plurality of attribute sets pertaining to each of the plurality of CSPs based on the generated identity schema, a plurality of policies, a plurality of permissions and a plurality of resources associated with the heterogeneous multi-cloud environment. Furthermore, the computer readable program, when executed on a computing device, causes the computing device to classify the plurality of attribute sets pertaining to each of the plurality of CSPs into one of a) a plurality of Personally Identifiable Information (PII) parameters b) a plurality of cryptographic and security parameters and c) a plurality of technical parameters based on a plurality of privacy metrics using a trained self-learning model. Furthermore, the computer readable program, when executed on a computing device, causes the computing device to generate a plurality of global attribute sets by mapping the classified plurality of attribute sets pertaining to each of the plurality of CSPs using one of (i) a predefined local global mapping templates and (ii) a mapping provided by the trained self- learning model. Furthermore, the computer readable program, when executed on a computing device, causes the computing device to generate, a plurality of merged identity tuples by combining the plurality of global attribute sets in a plurality of combinations, wherein each attribute from among the plurality of global attribute sets is associated with a privacy-based weight, wherein the privacy-based weight is determined using the trained self-learning model and updated whenever there is a change in cloud information. Furthermore, the computer readable program, when executed on a computing device, causes the computing device to compute, a weighted sum-based confidence score associated with each of the plurality of merged identity tuples, wherein the weighted sum-based confidence score and the plurality of merged tuples are re-evaluated dynamically whenever there is any changes in at least one of (i) the identity information (ii) attribute privacy weights and (iii) the attributes. Finally, the computer readable program, when executed on a computing device, causes the computing device to identify an optimal plurality of merged identity tuples from among the plurality of merged identity tuples pertaining to each of the plurality of CSPs for unified identity access management based on the associated weighted sum-based confidence score.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for unified identity management in multi-cloud environment, in accordance with some embodiments of the present disclosure.
FIG. 1B illustrates overall functional architecture of the system for unified identity management in multi-cloud environment, in accordance with some embodiments of the present disclosure.
FIG. 2A and FIG. 2B (referred to as FIG. 2) illustrates a flow diagram for a processor implemented method for unified identity management in multi-cloud environment, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Enterprises having onboarded their resources into multiple clouds often have to use a third-party identity manager service that hosts their own version of login and other routines. These solutions often require users and administrators of the business to move into the active identity manager system by way of on boarding or administrative transfer works. This leads to a lot of human errors, operational overhead and threat of unused and non-onboarded solutions. Thus, there is a requirement for a unified view for entities spread across multi cloud setup that is dynamic and real-time based on the clouds and data involved. To address the technical complexity of machine analysis of the document, embodiments herein provide a method and system for unified identity management in multi-cloud environment. The method disclosed provides a unified Identity Access Management (IAM) capable of mapping heterogenous identities in multi-cloud environment and give the enterprise a common view of identities among the CSPs. Furter, the present disclosure provides a dynamic and adaptive unified identity generation algorithm based on self-learning. The dynamism helps the system to modify itself in creating dynamic identity tuple as per the change in the multi-cloud environment.

The present disclosure receives a plurality of identity attributes of Cloud Service Providers (CSPs) associated with a heterogeneous multi-cloud environment. Further, an identity schema of the CSPs is generated based on the associated plurality of identity attributes using an encoding technique. Post generating the identity schema, a plurality of attribute sets of the CSPs are generated based on the generated identity schema, a plurality of policies, a plurality of permissions and a plurality of resources associated with the heterogeneous multi-cloud environment. Further, the plurality of attribute sets is classified into a plurality of Personally Identifiable Information (PII) parameters, a plurality of cryptographic and security parameters, and plurality of technical parameters based on a plurality of privacy metrics using a trained self-learning model. Further, a plurality of global attribute sets is generated by mapping the classified plurality of attribute sets pertaining to each of the plurality of CSPs using a predefined local global mapping templates or a mapping provided by the trained self- learning model. Post generating the attribute sets, a plurality of merged identity tuples are generated by combining the plurality of global attribute sets in a plurality of combinations, wherein each attribute from among the plurality of global attribute sets is associated with a privacy-based weight, wherein the privacy-based weight is determined using the trained self-learning model and updated whenever there is a change in cloud information. Further, a weighted sum-based confidence score is computed for the plurality of merged identity tuples. Finally, an optimal plurality of merged identity tuples are identified based on the associated weighted sum-based confidence score.

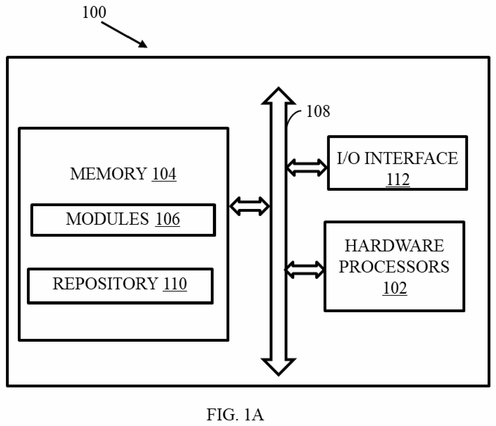

Referring now to the drawings, more particularly to FIG. 1A through FIG. 2B, where similar reference characters denote corresponding features consistently throughout the figures, there are shown preferred embodiments, and these embodiments are described in the context of the following exemplary system and/or method.

FIG. 1A is a functional block diagram of system 100 for Unified identity management in multi-cloud environment, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Unified identity management in multi-cloud environment. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for Unified identity management in multi-cloud environment.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, or a Relational Database Management System (RDBMS).

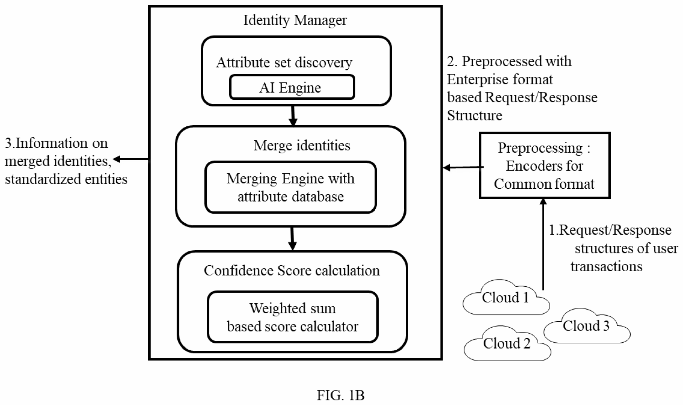

The overall architecture of the system of FIG. 1A is explained in conjunction with FIG. 1B. Here, FIG. 1B illustrates overall functional architecture of the system for unified identity management in multi-cloud environment, in accordance with some embodiments of the present disclosure.

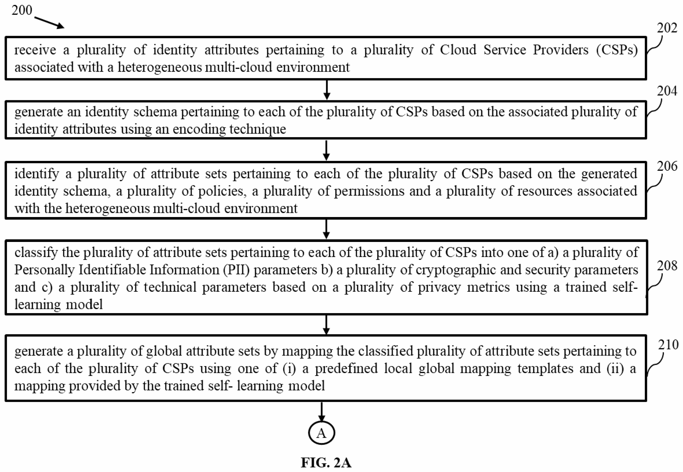

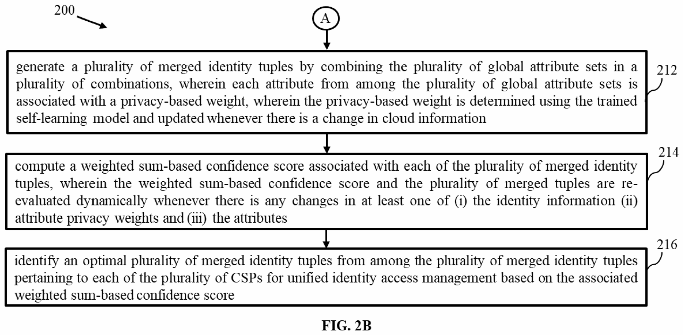

The working of the components of system 100 are explained with reference to the method steps depicted in FIG. 2.

FIG. 2 is an exemplary flow diagram illustrating a method 200 for unified identity management in multi-cloud environment implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of method 200, the one or more hardware processors 102 are configured by the programmed instructions to receive a plurality of identity attributes pertaining to a plurality of Cloud Service Providers (CSPs) associated with a heterogeneous multi-cloud environment. For example, the identity attributes are {username, phoneNumber, accountEnabled, country, id, preferredLanguage}.

For example, consider 3 clouds (cloud 1, cloud 2 and cloud 3) and number of users = 4 in each cloud and the total number of users= 12 and all the 12 users from a single organization. The system receives 12 identity attributes from 3 clouds each with unique attribute sets. A simplified version of identity attribute sets of 3 clouds are given in Table I.

**Table I**

| Cloud1 | Cloud2 | Cloud3 |
|---|---|---|
| { | { | { |
| "User ID": "aws-user-123", | "ObjectID":"azure-user- | "AccountID": "gcp- |
| "UserName": "jdoe", | 987", | user-555", |
| "Email": | "UserPrincipalName": | "DisplayName": |
| "jdoe.example.com", | "jdoe", | "jdoe", |
| "Role": "admin", | "Mail": | "ContactEmail": |
| "PublicKey": | "jdoe@example.com", | jdoe@email.com, |
| "AWS_PUBLIC_KEY_123", | "AccessLevel": | "Permissions": |
| "Cell": 2012345678 | "Administrator", | "admin", |
| } | .... | .... |
| | } | } |

At step 204 of the method 200, the one or more hardware processors 102 is configured by the programmed instructions to generate an identity schema pertaining to each of the plurality of CSPs based on the associated plurality of identity attributes using an encoding technique. For example, the identity schema for the example shown in Table I is as shown in Table II.

**Table II**

| generated identity format | Cloud1 | Cloud2 | Cloud3 |
|---|---|---|---|
| UnifiedUser ID | USerID | ObjectID | AccountID/Pirncip alID |
| username | UserName | userPrincipalName | primary Email |
| companyName | companyName | companyName | companyName |
| preferredLanguage | preferredLanguage | preferredLanguage | preferredLanguage |
| Country | Country | Country | Country |
| accountEnabled | accountEnabled | accountEnabled | accountEnabled |
| password | password | password | passwordProfile |
| isAdmin | null | null | isAdmin |
| phoneNumber | Phones, cell | businessPhones | Phones |
| displayName | displayName | displayName | Display_name |
| lastName | lastName | lastName | Surname |
| firstName | firstName | First_name | givenName |
| email | primary Email | mail | ["UserName", "otherMails"], |
| lastLoginTime | lastLoginTime | signInSessionsValidFromDateTime | null |

Referring back to FIG. 2, at step 206 of the method 200, the one or more hardware processors 102 is configured by the programmed instructions to identify a plurality of attribute sets pertaining to each of the plurality of CSPs based on the generated identity schema, a plurality of policies, a plurality of permissions and a plurality of resources associated with the heterogeneous multi-cloud environment. For example, the attribute sets looks like {id, firstName, lastName, primaryEmail, password, isAdmin,isDelegatedAdmin, agreedToTerms, displayName,jobTitle,accountEnabled,country,preferredLanguage} as shown in Table III.

**Table III**

| Cloud1 | Cloud2 | Cloud3 |
|---|---|---|
| { | { | { |
| "UnifiedUserID": "aws-user-123", | "UnifiedUserID":"azure-user-987", | "UnifiedUserID": |
| | | "gcp-user-555", |
| "UserName": "jdoe", | "UserName": "jdoe", | "UserName": |
| "Email": | "Email": | "jdoe", |
| "jdoe.example.com", | "jdoe@example.com", | "Email": |
| "Role": "admin", | "Role": "Administrator", | jdoe@email.com, |
| "PublicKey": | .... | "Role": "admin", |
| "AWS_PUBLIC_KEY_123", | } | .... |
| "phones": 2012345678 | | } |
| } | | |

At step 208 of the method 200, the one or more hardware processors 102 are configured by the programmed instructions to classify the plurality of attribute sets pertaining to each of the plurality of CSPs into one of a) a plurality of Personally Identifiable Information (PII) parameters b) a plurality of cryptographic and security parameters and c) a plurality of technical parameters based on a plurality of privacy metrics using a trained self-learning model.

The plurality of PII parameters includes a username, a picture profile URL, a personal mobile phone number, a facsimile number, an employee ID, a home phone number, and an office phone number. The plurality of crypto parameters includes public keys and digital certificates. The plurality of technical parameters includes email id, user id, username, and Light Weight Directory Access Protocol (LDAP).

At step 210 of the method 200, the one or more hardware processors 102 are configured by the programmed instructions to generate a plurality of global attribute sets by mapping the classified plurality of attribute sets pertaining to each of the plurality of CSPs using one of (i) a predefined local global mapping templates and (ii) a mapping provided by the trained self-learning model. The plurality of local-global mapping templates comprises a plurality of cloud specific attributes, a plurality of common cloud attributes and a plurality of application sets.

Some sample attributes from the global and local mapping is given as "id": ["id", "id"], "username": ["primaryEmail", "userPrincipalName", "UserName"], "creationDate": ["creationTime", "createdDateTime", "CreateDate"], "lastLoginTime": ["lastLoginTime", "signInSessionsValidFromDateTime", "PasswordLastUsed"], "email": ["primaryEmail", "mail", "UserName"], "firstName": ["firstName", "givenName"], "lastName": ["lastName", "surname"], "displayName": ["displayName", "displayName"], "jobTitle": ["jobTitle", "jobTitle"], "phoneNumber": ["phones", ["businessPhones", "mobilePhone"]], "password": ["password", "passwordProfile"], "isAdmin": ["isAdmin", null], "accountEnabled": ["accountEnabled", "accountEnabled", null], "country": ["country", "country"], "preferredLanguage": ["preferredLanguage", "preferredLanguage"], "companyName": ["companyName", "companyName"].

The self-learning model is initially trained using Natural Language Processing (NLP) tools for text extraction and then finetuned to learn API, syntax and formats from the extracted text, wherein the self-learning model is triggered whenever there is a change in the multi-cloud environment.

The self-learning model is initially trained with the involving cloud documentation (documentation of Cloud1, Cloud2, Cloud3). The self-learning is done using opensource/available Natural Language Processing (NLP) tools for text extraction and training. Further, the model is trained/finetuned to learn Application Programming Interfaces (APIs), syntaxes, semantic trees from the extracted test. If there is any change in the cloud documentations of clouds itself, it is represented in real-time by retraining the data. The training helps the model learn the various representations of user data across clouds. For instance, Cloud 1 "IAM Users", Cloud 2 "Active Directory", Cloud 3 "Principals" represent similar identities.

At step 212 of the method 200, the one or more hardware processors 102 are configured by the programmed instructions to generate a plurality of merged identity tuples by combining the plurality of global attribute sets in a plurality of combinations, wherein each attribute from among the plurality of global attribute sets is associated with a privacy-based weight, wherein the privacy-based weight is determined using the trained self-learning model and updated whenever there is a change in cloud information.

At step 214 of the method 200, the one or more hardware processors 102 is configured by the programmed instructions to compute a weighted sum-based confidence score associated with each of the plurality of merged identity tuples. The weighted sum-based confidence score and the plurality of merged tuples are re-evaluated dynamically whenever there is any change in at least one of (i) the identity information (ii) attribute privacy weights and (iii) the attributes.

For example, each attribute is assigned a weight based on its privacy level, wherein the weight is either predetermined by administrator or as recommended by the self-learning model. Weights always range between 0 and 1. Weights are assigned based on the attribute's importance, uniqueness and privacy level. When the self-learning model is trained on multi-cloud documentation, it begins by analyzing patterns in attributes across cloud providers and their association with identity. Attributes are categorized based on how strongly they help in uniquely identifying or verifying an identity. For example, (i) High uniqueness and sensitivity: PII (like email, phone) gets high weights since they're unique to each user and are often consistent across clouds (ii) Moderate uniqueness but variable: Security attributes like (PublicKey) get moderate weights, as they authenticate user but vary frequently across clouds (iii) Technical data: Technical attributes like Role, last Access etc. get lower weights as they are non-unique to user and are specific to clouds and (iv) As the system processes real identity schemas, it observes successful merges and error cases (false meres, unmatched identities). Based on this feedback, the model increases weights on attributes that consistently contribute to accurate mergers. Reduces weights on attributes leading to mismatches. Table IV illustrates some example attributes and their corresponding weights.

**Table IV**

| **Attribute** | **Privacy Level** | **Weight** |
|---|---|---|
| UnifiedUserID (") | Highest (primary, PII) | 0.6 |
| Email (PII -based) | High (unique, PII) | 0.4 |
| lastName | High (somewhat common, PII) | 0.25 |
| firstName | High (somewhat common, PII) | 0.25 |
| PublicKey (Cryptographic) | Medium (always unique) | 0.02 |
| Role (Technical) | Low (public known) | 0.15 |
| LastAccess (") | Low (not required) | 0.05 |
| Attribute | Privacy Level | Weight |
| UnifiedUserID (") | Highest (primary, PII) | 0.6 |
| Email (PII -based) | High (unique, PII) | 0.4 |
| lastName | High (somewhat common, PII) | 0.25 |
| firstName | High (somewhat common, PII) | 0.25 |
| PublicKey (Cryptographic) | Medium (always unique) | 0.02 |
| Role (Technical) | Low (public known) | 0.15 |
| LastAccess (") | Low (not required) | 0.05 |

For each potential identity pairs across the clouds, the system evaluates the attribute matches using the assigned weights, creating a confidence score as a measure of certainty for merging identities. Confidence Calculation is performed as: If all attributes match, the confidence is 1.0 (100%). Else, If only some attributes are available, then the score is calculated as a sum of weights for matching attributes divided by total possible weight.

**Example Scenario:** Cloud2 Identity: {"UnifiedUserID": "aws-user-123", "Email": "jdoe@example.com", "PublicKey": "Cloud2_PUBLIC_KEY_123"}. Cloud3 Identity: {"UnifiedUserID": "azure-user-987", "Email": "jdoe@example.com", "PublicKey": "Cloud3_PUBLIC_KEY_987", "Role": "admin"}. **Score Calculation Steps include** (i) Email match contributes 0.4 (ii) PublicKey non-exact match but similar (per cryptographic match threshold), contributes 0.15 (ii) Role doesn't match (Cloud2 lacks it, Azure has "admin") and contributes 0.0. The Confidence Score = (0.4 + 0.15) / (0.4 + 0.3 + 0.15 + 0.15) = 0.55 / 1 = 55%.

Interpretation of the Score: The 55% score suggests moderate confidence that these identities may represent the same user but signals uncertainty. This value could trigger further verification or pass to the next merging step if it meets the system threshold.

**Handling Missing Attributes:**_When an identity lacks an attribute (e.g., Role in Cloud), the system only uses available attributes for scoring and recalculates possible total weight accordingly. This dynamic scoring adjustment prevents penalizing identities due to cloud-specific attribute omissions. For example, if a Role is missing in Cloud2, the total weight reduces from 1.0 to 0.85. Hence, the revised score becomes: Confidence Score = (0.4 + 0.15) / 0.85 ≈ 65.

Generating Merged Identity Tuples: Using the transformed attributes, the system generated merged identity tuples for potential matches between identities from different clouds.

**Duplicate Resolution:** The system may generate multiple potential matches for a single identity. To resolve duplicates: (i) Filter by Confidence Score: Pairs with scores below a set threshold (e.g., 75%) are discarded (ii) Prioritize Complete Matches: Prefer identities with a full set of high-weight matches (e.g., Email and PublicKey) over those with only partial matches.

At step 216 of the method 200, the one or more hardware processors 102 are configured by the programmed instructions to identify an optimal plurality of merged identity tuples from among the plurality of merged identity tuples pertaining to each of the plurality of CSPs for unified/common identity access management based on the associated weighted sum-based confidence score.

For example, for valid merges, the system selects the highest-confidence grouping per user and assigns a unique unified ID. Example of a Merged Identity Result:

```
                {
                 "UnifiedUserID": "merged-user-001",
                 "Email": "jdoe@example.com",
                 "PublicKey": "COMBINED_PUBLIC_KEY_001",
                 "Role": "admin",
                 "LastAccess": "2023-08-20T12:34:56"
                }
```

In cases of attribute conflicts (e.g., different Roles), the system uses role priorities or other rules, opting for the most frequent or recent value. The confidence score represents how certain the system is that the merged identity accurately reflects the same user across clouds. Higher confidence scores suggest stronger evidence of identity continuity, especially if privacy-sensitive attributes match. **Confidence Score for Verification:** Above 85%: High confidence; automatically merge. 65-85%: Moderate confidence; merge with flags for verification. Below 65%: Low confidence; discard or flag for review.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of unified identity management in a multi-cloud environment. The system presents a cloud-agnostic framework. The present disclosure unifies disparate identity attributes into a standardized format, enabling seamless integration across different cloud platforms. The dynamic self-learning model not only adapts to new cloud environments but also continuously refines attribute sets and confidence scores, ensuring accurate and efficient identity resolution. The privacy-based weighting for identity attributes enhances security and compliance. This system provides organizations with a robust, automated identity management tool that simplifies multi-cloud operations, reduces administrative overhead, and improves security by confidently identifying unique users across diverse cloud platforms.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:
receiving (202), by one or more hardware processors, a plurality of identity attributes pertaining to a plurality of Cloud Service Providers (CSPs) associated with a heterogeneous multi-cloud environment;
generating (204), by the one or more hardware processors, an identity schema pertaining to each of the plurality of CSPs based on the associated plurality of identity attributes using an encoding technique;
identifying (206), by the one or more hardware processors, a plurality of attribute sets pertaining to each of the plurality of CSPs based on the generated identity schema, a plurality of policies, a plurality of permissions and a plurality of resources associated with the heterogeneous multi-cloud environment;
classifying (208), by the one or more hardware processors, the plurality of attribute sets pertaining to each of the plurality of CSPs into one of a) a plurality of Personally Identifiable Information (PII) parameters b) a plurality of cryptographic and security parameters and c) a plurality of technical parameters based on a plurality of privacy metrics using a trained self-learning model;
generating (210), by the one or more hardware processors, a plurality of global attribute sets by mapping the classified plurality of attribute sets pertaining to each of the plurality of CSPs using one of (i) a predefined local global mapping templates and (ii) a mapping provided by the trained self-learning model;
generating (212), by the one or more hardware processors, a plurality of merged identity tuples by combining the plurality of global attribute sets in a plurality of combinations, wherein each attribute from among the plurality of global attribute sets is associated with a privacy-based weight, wherein the privacy-based weight is determined using the trained self-learning model and updated whenever there is a change in cloud information;
computing (214), by the one or more hardware processors, a weighted sum-based confidence score associated with each of the plurality of merged identity tuples, wherein the weighted sum-based confidence score and the plurality of merged tuples are re-evaluated dynamically whenever there is any changes in at least one of (i) the identity information (ii) attribute privacy weights and (iii) the attributes; and
identifying (216), by the one or more hardware processors, an optimal plurality of merged identity tuples from among the plurality of merged identity tuples pertaining to each of the plurality of CSPs for unified identity access management based on the associated weighted sum-based confidence score.

2. The processor-implemented method as claimed in claim 1, wherein the plurality of PII parameters comprises a username, a picture profile URL, a personal mobile phone number, a facsimile number, an employee ID, a home phone number, an office phone number.

3. The processor-implemented method as claimed in claim 1, wherein the plurality of crypto parameters comprises public keys and digital certificates.

4. The processor-implemented method as claimed in claim 1, wherein the plurality of technical parameters comprises email id, user id, username, and Light Weight Directory Access Protocol (LDAP).

5. The processor-implemented method as claimed in claim 1, wherein the plurality of local-global mapping templates comprises a plurality of cloud specific attributes, a plurality of common cloud attributes and a plurality of application sets.

6. The processor-implemented method as claimed in claims 1, wherein the self-learning model is initially trained using Natural Language Processing (NLP) tools for text extraction and then finetuned to learn API, syntax and formats from the extracted text, wherein the self-learning model is triggered whenever there is a change in the multi-cloud environment.

7. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive a plurality of identity attributes pertaining to a plurality of Cloud Service Providers (CSPs) associated with a heterogeneous multi-cloud environment;
generate an identity schema pertaining to each of the plurality of CSPs based on the associated plurality of identity attributes using an encoding technique;
identify a plurality of attribute sets pertaining to each of the plurality of CSPs based on the generated identity schema, a plurality of policies, a plurality of permissions and a plurality of resources associated with the heterogeneous multi-cloud environment;
classify the plurality of attribute sets pertaining to each of the plurality of CSPs into one of a) a plurality of Personally Identifiable Information (PII) parameters b) a plurality of cryptographic and security parameters and c) a plurality of technical parameters based on a plurality of privacy metrics using a trained self-learning model;
generate a plurality of global attribute sets by mapping the classified plurality of attribute sets pertaining to each of the plurality of CSPs using one of (i) a predefined local global mapping templates and (ii) a mapping provided by the trained self- learning model;
generate a plurality of merged identity tuples by combining the plurality of global attribute sets in a plurality of combinations, wherein each attribute from among the plurality of global attribute sets is associated with a privacy-based weight, wherein the privacy-based weight is determined using the trained self-learning model and updated whenever there is a change in cloud information;
compute a weighted sum-based confidence score associated with each of the plurality of merged identity tuples, wherein the weighted sum-based confidence score and the plurality of merged tuples are re-evaluated dynamically whenever there is any changes in at least one of (i) the identity information (ii) attribute privacy weights and (iii) the attributes; and
identify an optimal plurality of merged identity tuples from among the plurality of merged identity tuples pertaining to each of the plurality of CSPs for unified identity access management based on the associated weighted sum-based confidence score.

8. The system of claim 7, wherein the plurality of PII parameters comprises a username, a picture profile URL, a personal mobile phone number, a facsimile number, an employee ID, a home phone number, an office phone number.

9. The system of claim 7, wherein the plurality of crypto parameters comprises public keys and digital certificates.

10. The system of claim 7, wherein the plurality of technical parameters comprises email id, user id, username, and Light Weight Directory Access Protocol (LDAP).

11. The system of claim 7, wherein the plurality of local-global mapping templates comprises a plurality of cloud specific attributes, a plurality of common cloud attributes and a plurality of application sets.

12. The system of claims 7, wherein the self-learning model is initially trained using Natural Language Processing (NLP) tools for text extraction and then finetuned to learn API, syntax and formats from the extracted text, wherein the self-learning model is triggered whenever there is a change in the multi-cloud environment.

13. One or more non-transitory machine-readable information storage mediums comprising one or more instructions which when executed by one or more hardware processors cause:
receiving a plurality of identity attributes pertaining to a plurality of Cloud Service Providers (CSPs) associated with a heterogeneous multi-cloud environment;
generating an identity schema pertaining to each of the plurality of CSPs based on the associated plurality of identity attributes using an encoding technique;
identifying a plurality of attribute sets pertaining to each of the plurality of CSPs based on the generated identity schema, a plurality of policies, a plurality of permissions and a plurality of resources associated with the heterogeneous multi-cloud environment;
classifying the plurality of attribute sets pertaining to each of the plurality of CSPs into one of a) a plurality of Personally Identifiable Information (PII) parameters b) a plurality of cryptographic and security parameters and c) a plurality of technical parameters based on a plurality of privacy metrics using a trained self-learning model;
generating a plurality of global attribute sets by mapping the classified plurality of attribute sets pertaining to each of the plurality of CSPs using one of (i) a predefined local global mapping templates and (ii) a mapping provided by the trained self- learning model;
generating a plurality of merged identity tuples by combining the plurality of global attribute sets in a plurality of combinations, wherein each attribute from among the plurality of global attribute sets is associated with a privacy-based weight, wherein the privacy-based weight is determined using the trained self-learning model and updated whenever there is a change in cloud information;
computing a weighted sum-based confidence score associated with each of the plurality of merged identity tuples, wherein the weighted sum-based confidence score and the plurality of merged tuples are re-evaluated dynamically whenever there is any changes in at least one of (i) the identity information (ii) attribute privacy weights and (iii) the attributes; and
identifying an optimal plurality of merged identity tuples from among the plurality of merged identity tuples pertaining to each of the plurality of CSPs for unified identity access management based on the associated weighted sum-based confidence score.

14. The one or more non-transitory machine-readable information storage mediums of claim 13, wherein the plurality of PII parameters comprises a username, a picture profile URL, a personal mobile phone number, a facsimile number, an employee ID, a home phone number, an office phone number.

15. The one or more non-transitory machine-readable information storage mediums of claim 13, wherein the plurality of crypto parameters comprises public keys and digital certificates, wherein the plurality of technical parameters comprises email id, user id, username, and Light Weight Directory Access Protocol (LDAP), and wherein the plurality of local-global mapping templates comprises a plurality of cloud specific attributes, a plurality of common cloud attributes and a plurality of application sets.

## Patentansprüche

1. Prozessorimplementiertes Verfahren (200), wobei das Verfahren Folgendes umfasst:
Empfangen (202), durch einen oder mehrere Hardwareprozessoren, einer Mehrzahl von Identitätsattributen, die sich auf eine Mehrzahl von Cloud-Dienstanbietern (CSPs) beziehen, die einer heterogenen Multi-Cloud-Umgebung zugeordnet sind;
Erzeugen (204), durch den einen oder die mehreren Hardwareprozessoren, eines Identitätsschemas, das sich auf jeden der Mehrzahl von CSPs bezieht, basierend auf der zugeordneten Mehrzahl von Identitätsattributen unter Verwendung einer Codierungstechnik;
Identifizieren (206), durch den einen oder die mehreren Hardwareprozessoren, einer Mehrzahl von Attributsätzen, die sich auf jeden der Mehrzahl von CSPs beziehen, basierend auf dem erzeugten Identitätsschema, einer Mehrzahl von Richtlinien, einer Mehrzahl von Berechtigungen und einer Mehrzahl von Ressourcen, die der heterogenen Multi-Cloud-Umgebung zugeordnet sind;
Klassifizieren (208), durch den einen oder die mehreren Hardwareprozessoren, der Mehrzahl von Attributsätzen, die sich auf jeden der Mehrzahl von CSPs beziehen, in einen von a) einer Mehrzahl von Parametern persönlicher identifizierbarer Informationen (PII), b) einer Mehrzahl von kryptographischen und Sicherheitsparametern und c) einer Mehrzahl von technischen Parametern basierend auf einer Mehrzahl von Datenschutzmetriken unter Verwendung eines trainierten selbstlernenden Modells;
Erzeugen (210), durch den einen oder die mehreren Hardwareprozessoren, einer Mehrzahl von globalen Attributsätzen durch Abbilden der klassifizierten Mehrzahl von Attributsätzen, die sich auf jeden der Mehrzahl von CSPs beziehen, unter Verwendung eines von (i) einer vordefinierten lokalen globalen Abbildungsvorlage und (ii) einer Abbildung, die durch das trainierte selbstlernende Modell bereitgestellt wird;
Erzeugen (212), durch den einen oder die mehreren Hardwareprozessoren, einer Mehrzahl von zusammengeführten Identitätstupeln durch Kombinieren der Mehrzahl von globalen Attributsätzen in einer Mehrzahl von Kombinationen, wobei jedes Attribut aus der Mehrzahl von globalen Attributsätzen einem datenschutzbasierten Gewicht zugeordnet ist, wobei das datenschutzbasierte Gewicht unter Verwendung des trainierten selbstlernenden Modells bestimmt und immer dann aktualisiert wird, wenn eine Änderung der Cloud-Informationen vorliegt;
Berechnen (214), durch den einen oder die mehreren Hardwareprozessoren, eines gewichteten summenbasierten Vertrauenswerts, der jedem der Mehrzahl von zusammengeführten Identitätstupeln zugeordnet ist, wobei der gewichtete summenbasierte Vertrauenswert und die Mehrzahl von zusammengeführten Tupeln immer dann dynamisch neu bewertet werden, wenn Änderungen in mindestens einem von (i) den Identitätsinformationen, (ii) Attributdatenschutzgewichten und (iii) den Attributen vorliegen; und
Identifizieren (216), durch den einen oder die mehreren Hardwareprozessoren, einer optimalen Mehrzahl von zusammengeführten Identitätstupeln aus der Mehrzahl von zusammengeführten Identitätstupeln, die sich auf jeden der Mehrzahl von CSPs beziehen, für ein einheitliches Identitätszugriffsmanagement basierend auf dem zugeordneten gewichteten summenbasierten Vertrauenswert.

2. Prozessorimplementiertes Verfahren nach Anspruch 1, wobei die Mehrzahl von PII-Parametern einen Benutzernamen, eine Bildprofil-URL, eine persönliche Mobiltelefonnummer, eine Faksimilenummer, eine Mitarbeiterkennung, eine Heimtelefonnummer, eine Bürotelefonnummer umfasst.

3. Prozessorimplementiertes Verfahren nach Anspruch 1, wobei die Mehrzahl von Kryptoparametern öffentliche Schlüssel und digitale Zertifikate umfasst.

4. Prozessorimplementiertes Verfahren nach Anspruch 1, wobei die Mehrzahl von technischen Parametern eine E-Mail-Kennung, eine Benutzerkennung, einen Benutzernamen und ein Light Weight Directory Access Protocol (LDAP) umfasst.

5. Prozessorimplementiertes Verfahren nach Anspruch 1, wobei die Mehrzahl von lokal-globalen Zuordnungsvorlagen eine Mehrzahl von cloudspezifischen Attributen, eine Mehrzahl von gemeinsamen Cloud-Attributen und eine Mehrzahl von Anwendungssätzen umfasst.

6. Prozessorimplementiertes Verfahren nach Anspruch 1, wobei das selbstlernende Modell anfänglich unter Verwendung von Natural Language Processing (NLP)-Werkzeugen zur Textextraktion trainiert und dann feinabgestimmt wird, um API, Syntax und Formate aus dem extrahierten Text zu lernen, wobei das selbstlernende Modell immer dann ausgelöst wird, wenn eine Änderung in der Multi-Cloud-Umgebung vorliegt.

7. System (100), das Folgendes umfasst:
mindestens einen Speicher (104), der programmierte Anweisungen speichert; eine oder mehrere Eingabe/Ausgabe (I/O)-Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:
Empfangen einer Mehrzahl von Identitätsattributen, die sich auf eine Mehrzahl von Cloud-Dienstanbietern (CSPs) beziehen, die einer heterogenen Multi-Cloud-Umgebung zugeordnet sind;
Erzeugen eines Identitätsschemas, das sich auf jeden der Mehrzahl von CSPs bezieht, basierend auf der zugeordneten Mehrzahl von Identitätsattributen unter Verwendung einer Codierungstechnik;
Identifizieren einer Mehrzahl von Attributsätzen, die sich auf jeden der Mehrzahl von CSPs beziehen, basierend auf dem erzeugten Identitätsschema, einer Mehrzahl von Richtlinien, einer Mehrzahl von Berechtigungen und einer Mehrzahl von Ressourcen, die der heterogenen Multi-Cloud-Umgebung zugeordnet sind;
Klassifizieren der Mehrzahl von Attributsätzen, die sich auf jeden der Mehrzahl von CSPs beziehen, in einen von a) einer Mehrzahl von Parametern persönlicher identifizierbarer Informationen (PII), b) einer Mehrzahl von kryptographischen und Sicherheitsparametern und c) einer Mehrzahl von technischen Parametern basierend auf einer Mehrzahl von Datenschutzmetriken unter Verwendung eines trainierten selbstlernenden Modells;
Erzeugen einer Mehrzahl von globalen Attributsätzen durch Abbilden der klassifizierten Mehrzahl von Attributsätzen, die sich auf jeden der Mehrzahl von CSPs beziehen, unter Verwendung eines von (i) einer vordefinierten lokalen globalen Abbildungsvorlage und (ii) einer Abbildung, die durch das trainierte selbstlernende Modell bereitgestellt wird;
Erzeugen einer Mehrzahl von zusammengeführten Identitätstupeln durch Kombinieren der Mehrzahl von globalen Attributsätzen in einer Mehrzahl von Kombinationen, wobei jedes Attribut aus der Mehrzahl von globalen Attributsätzen einem datenschutzbasierten Gewicht zugeordnet ist, wobei das datenschutzbasierte Gewicht unter Verwendung des trainierten selbstlernenden Modells bestimmt und immer dann aktualisiert wird, wenn eine Änderung der Cloud-Informationen vorliegt;
Berechnen eines gewichteten summenbasierten Vertrauenswerts, der jedem der Mehrzahl von zusammengeführten Identitätstupeln zugeordnet ist, wobei der gewichtete summenbasierte Vertrauenswert und die Mehrzahl von zusammengeführten Tupeln immer dann dynamisch neu bewertet werden, wenn Änderungen in mindestens einem von (i) den Identitätsinformationen, (ii) Attributdatenschutzgewichten und (iii) den Attributen vorliegen; und
Identifizieren einer optimalen Mehrzahl von zusammengeführten Identitätstupeln aus der Mehrzahl von zusammengeführten Identitätstupeln, die sich auf jeden der Mehrzahl von CSPs beziehen, für ein einheitliches Identitätszugriffsmanagement basierend auf dem zugeordneten gewichteten summenbasierten Vertrauenswert.

8. System nach Anspruch 7, wobei die Mehrzahl von PII-Parametern einen Benutzernamen, eine Bildprofil-URL, eine persönliche Mobiltelefonnummer, eine Faksimilenummer, eine Mitarbeiterkennung, eine Heimtelefonnummer, eine Bürotelefonnummer umfasst.

9. System nach Anspruch 7, wobei die Mehrzahl von Kryptoparametern öffentliche Schlüssel und digitale Zertifikate umfasst.

10. System nach Anspruch 7, wobei die Mehrzahl von technischen Parametern eine E-Mail-Kennung, eine Benutzerkennung, einen Benutzernamen und ein Light Weight Directory Access Protocol (LDAP) umfasst.

11. System nach Anspruch 7, wobei die Mehrzahl von lokal-globalen Zuordnungsvorlagen eine Mehrzahl von cloudspezifischen Attributen, eine Mehrzahl von gemeinsamen Cloud-Attributen und eine Mehrzahl von Anwendungssätzen umfasst.

12. System nach Anspruch 7, wobei das selbstlernende Modell anfänglich unter Verwendung von Natural Language Processing (NLP)-Werkzeugen zur Textextraktion trainiert und dann feinabgestimmt wird, um API, Syntax und Formate aus dem extrahierten Text zu lernen, wobei das selbstlernende Modell immer dann ausgelöst wird, wenn eine Änderung in der Multi-Cloud-Umgebung vorliegt.

13. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:
Empfangen einer Mehrzahl von Identitätsattributen, die sich auf eine Mehrzahl von Cloud-Dienstanbietern (CSPs) beziehen, die einer heterogenen Multi-Cloud-Umgebung zugeordnet sind;
Erzeugen eines Identitätsschemas, das sich auf jeden der Mehrzahl von CSPs bezieht, basierend auf der zugeordneten Mehrzahl von Identitätsattributen unter Verwendung einer Codierungstechnik;
Identifizieren einer Mehrzahl von Attributsätzen, die sich auf jeden der Mehrzahl von CSPs beziehen, basierend auf dem erzeugten Identitätsschema, einer Mehrzahl von Richtlinien, einer Mehrzahl von Berechtigungen und einer Mehrzahl von Ressourcen, die der heterogenen Multi-Cloud-Umgebung zugeordnet sind;
Klassifizieren der Mehrzahl von Attributsätzen, die sich auf jeden der Mehrzahl von CSPs beziehen, in einen von a) einer Mehrzahl von Parametern persönlicher identifizierbarer Informationen (PII), b) einer Mehrzahl von kryptographischen und Sicherheitsparametern und c) einer Mehrzahl von technischen Parametern basierend auf einer Mehrzahl von Datenschutzmetriken unter Verwendung eines trainierten selbstlernenden Modells;
Erzeugen einer Mehrzahl von globalen Attributsätzen durch Abbilden der klassifizierten Mehrzahl von Attributsätzen, die sich auf jeden der Mehrzahl von CSPs beziehen, unter Verwendung eines von (i) einer vordefinierten lokalen globalen Abbildungsvorlage und (ii) einer Abbildung, die durch das trainierte selbstlernende Modell bereitgestellt wird;
Erzeugen einer Mehrzahl von zusammengeführten Identitätstupeln durch Kombinieren der Mehrzahl von globalen Attributsätzen in einer Mehrzahl von Kombinationen, wobei jedes Attribut aus der Mehrzahl von globalen Attributsätzen einem datenschutzbasierten Gewicht zugeordnet ist, wobei das datenschutzbasierte Gewicht unter Verwendung des trainierten selbstlernenden Modells bestimmt und immer dann aktualisiert wird, wenn eine Änderung der Cloud-Informationen vorliegt;
Berechnen eines gewichteten summenbasierten Vertrauenswerts, der jedem der Mehrzahl von zusammengeführten Identitätstupeln zugeordnet ist, wobei der gewichtete summenbasierte Vertrauenswert und die Mehrzahl von zusammengeführten Tupeln immer dann dynamisch neu bewertet werden, wenn Änderungen in mindestens einem von (i) den Identitätsinformationen, (ii) Attributdatenschutzgewichten und (iii) den Attributen vorliegen; und
Identifizieren einer optimalen Mehrzahl von zusammengeführten Identitätstupeln aus der Mehrzahl von zusammengeführten Identitätstupeln, die sich auf jeden der Mehrzahl von CSPs beziehen, für ein einheitliches Identitätszugriffsmanagement basierend auf dem zugeordneten gewichteten summenbasierten Vertrauenswert.

14. Ein oder mehrere nichtflüchtige maschinenlesbare Informationsspeichermedien nach Anspruch 13, wobei die Mehrzahl von PII-Parametern einen Benutzernamen, eine Bildprofil-URL, eine persönliche Mobiltelefonnummer, eine Faksimilenummer, eine Mitarbeiterkennung, eine Heimtelefonnummer, eine Bürotelefonnummer umfasst.

15. Ein oder mehrere nichtflüchtige maschinenlesbare Informationsspeichermedien nach Anspruch 13, wobei die Mehrzahl von Kryptoparametern öffentliche Schlüssel und digitale Zertifikate umfasst, wobei die Mehrzahl von technischen Parametern eine E-Mail-Kennung, eine Benutzerkennung, einen Benutzernamen und ein Light Weight Directory Access Protocol (LDAP) umfasst, und wobei die Mehrzahl von lokal-globalen Zuordnungsvorlagen eine Mehrzahl von cloudspezifischen Attributen, eine Mehrzahl von gemeinsamen Cloud-Attributen und eine Mehrzahl von Anwendungssätzen umfasst.

## Revendications

1. Procédé mis en œuvre par processeur (200), le procédé comprenant :
la réception (202), par un ou plusieurs processeurs matériels, d'une pluralité d'attributs d'identité relatifs à une pluralité de fournisseurs de services cloud (CSP) associés à un environnement multicloud hétérogène ;
la génération (204), par les un ou plusieurs processeurs matériels, d'un schéma d'identité relatif à chacun de la pluralité de CSP sur la base de la pluralité associée d'attributs d'identité en utilisant une technique de codage ;
l'identification (206), par les un ou plusieurs processeurs matériels, d'une pluralité d'ensembles d'attributs relatifs à chacun de la pluralité de CSP sur la base du schéma d'identité généré, d'une pluralité de politiques, d'une pluralité de permissions et d'une pluralité de ressources associées à l'environnement multicloud hétérogène ;
la classification (208), par les un ou plusieurs processeurs matériels, de la pluralité d'ensembles d'attributs relatifs à chacun de la pluralité de CSP dans l'un parmi a) une pluralité de paramètres d'informations d'identification personnelle (PII), b) une pluralité de paramètres cryptographiques et de sécurité et c) une pluralité de paramètres techniques sur la base d'une pluralité de métriques de confidentialité en utilisant un modèle auto-apprenant entraîné ;
la génération (210), par les un ou plusieurs processeurs matériels, d'une pluralité d'ensembles d'attributs globaux en mettant en correspondance la pluralité classée d'ensembles d'attributs relatifs à chacun de la pluralité de CSP en utilisant l'un parmi (i) des modèles de mise en correspondance local-global prédéfinis et (ii) une mise en correspondance fournie par le modèle auto-apprenant entraîné ;
la génération (212), par les un ou plusieurs processeurs matériels, d'une pluralité de tuples d'identité fusionnés en combinant la pluralité d'ensembles d'attributs globaux dans une pluralité de combinaisons, dans lequel chaque attribut parmi la pluralité d'ensembles d'attributs globaux est associé à un poids basé sur la confidentialité, dans lequel le poids basé sur la confidentialité est déterminé en utilisant le modèle auto-apprenant entraîné et mis à jour chaque fois qu'il y a un changement dans des informations cloud ;
le calcul (214), par les un ou plusieurs processeurs matériels, d'un score de confiance basé sur une somme pondérée associé à chacun de la pluralité de tuples d'identité fusionnés, dans lequel le score de confiance basé sur une somme pondérée et la pluralité de tuples fusionnés sont réévalués dynamiquement chaque fois qu'il y a des changements dans au moins l'un parmi (i) les informations d'identité, (ii) les poids de confidentialité d'attribut et (iii) les attributs ; et
l'identification (216), par les un ou plusieurs processeurs matériels, d'une pluralité optimale de tuples d'identité fusionnés parmi la pluralité de tuples d'identité fusionnés relatifs à chacun de la pluralité de CSP pour une gestion unifiée des identités et des accès sur la base du score de confiance basé sur une somme pondérée associé.

2. Procédé mis en œuvre par processeur selon la revendication 1, dans lequel la pluralité de paramètres PII comprend un nom d'utilisateur, un URL de photo de profil, un numéro de téléphone mobile personnel, un numéro de télécopie, un ID d'employé, un numéro de téléphone domestique, un numéro de téléphone de bureau.

3. Procédé mis en œuvre par processeur selon la revendication 1, dans lequel la pluralité de paramètres cryptographiques comprend des clés publiques et des certificats numériques.

4. Procédé mis en œuvre par processeur selon la revendication 1, dans lequel la pluralité de paramètres techniques comprend un identifiant de courrier électronique, un identifiant d'utilisateur, un nom d'utilisateur et un protocole LDAP (Lightweight Directory Access Protocol).

5. Procédé mis en œuvre par processeur selon la revendication 1, dans lequel la pluralité de modèles de mise en correspondance local-global comprend une pluralité d'attributs spécifiques au cloud, une pluralité d'attributs cloud communs et une pluralité d'ensembles d'applications.

6. Procédé mis en œuvre par processeur selon la revendication 1, dans lequel le modèle auto-apprenant est initialement entraîné en utilisant des outils de traitement automatique du langage naturel (NLP) pour une extraction de texte et ensuite affiné pour apprendre une API, une syntaxe et des formats à partir du texte extrait, dans lequel le modèle auto-apprenant est déclenché chaque fois qu'il y a un changement dans l'environnement multicloud.

7. Système (100) comprenant :
au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :
recevoir une pluralité d'attributs d'identité relatifs à une pluralité de fournisseurs de services cloud (CSP) associés à un environnement multicloud hétérogène ;
générer un schéma d'identité relatif à chacun de la pluralité de CSP sur la base de la pluralité associée d'attributs d'identité en utilisant une technique de codage ;
identifier une pluralité d'ensembles d'attributs relatifs à chacun de la pluralité de CSP sur la base du schéma d'identité généré, d'une pluralité de politiques, d'une pluralité de permissions et d'une pluralité de ressources associées à l'environnement multicloud hétérogène ;
classer la pluralité d'ensembles d'attributs relatifs à chacun de la pluralité de CSP dans l'un parmi a) une pluralité de paramètres d'informations d'identification personnelle (PII), b) une pluralité de paramètres cryptographiques et de sécurité et c) une pluralité de paramètres techniques sur la base d'une pluralité de métriques de confidentialité en utilisant un modèle auto-apprenant entraîné ;
générer une pluralité d'ensembles d'attributs globaux en mettant en correspondance la pluralité classée d'ensembles d'attributs relatifs à chacun de la pluralité de CSP en utilisant l'un parmi (i) des modèles de mise en correspondance local-global prédéfinis et (ii) une mise en correspondance fournie par le modèle auto-apprenant entraîné ;
générer une pluralité de tuples d'identité fusionnés en combinant la pluralité d'ensembles d'attributs globaux dans une pluralité de combinaisons, dans lequel chaque attribut parmi la pluralité d'ensembles d'attributs globaux est associé à un poids basé sur la confidentialité, dans lequel le poids basé sur la confidentialité est déterminé en utilisant le modèle auto-apprenant entraîné et mis à jour chaque fois qu'il y a un changement dans des informations cloud ;
calculer un score de confiance basé sur une somme pondérée associé à chacun de la pluralité de tuples d'identité fusionnés, dans lequel le score de confiance basé sur une somme pondérée et la pluralité de tuples fusionnés sont réévalués dynamiquement chaque fois qu'il y a des changements dans au moins l'un parmi (i) les informations d'identité, (ii) les poids de confidentialité d'attribut et (iii) les attributs ; et
identifier une pluralité optimale de tuples d'identité fusionnés parmi la pluralité de tuples d'identité fusionnés relatifs à chacun de la pluralité de CSP pour une gestion unifiée des identités et des accès sur la base du score de confiance basé sur une somme pondérée associé.

8. Système selon la revendication 7, dans lequel la pluralité de paramètres PII comprend un nom d'utilisateur, un URL de photo de profil, un numéro de téléphone mobile personnel, un numéro de télécopie, un ID d'employé, un numéro de téléphone domestique, un numéro de téléphone de bureau.

9. Système selon la revendication 7, dans lequel la pluralité de paramètres cryptographiques comprend des clés publiques et des certificats numériques.

10. Système selon la revendication 7, dans lequel la pluralité de paramètres techniques comprend un identifiant de courrier électronique, un identifiant d'utilisateur, un nom d'utilisateur et un protocole LDAP (Lightweight Directory Access Protocol).

11. Système selon la revendication 7, dans lequel la pluralité de modèles de mise en correspondance local-global comprend une pluralité d'attributs spécifiques au cloud, une pluralité d'attributs cloud communs et une pluralité d'ensembles d'applications.

12. Système selon la revendication 7, dans lequel le modèle auto-apprenant est initialement entraîné en utilisant des outils de traitement automatique du langage naturel (NLP) pour une extraction de texte et ensuite affiné pour apprendre une API, une syntaxe et des formats à partir du texte extrait, dans lequel le modèle auto-apprenant est déclenché chaque fois qu'il y a un changement dans l'environnement multicloud.

13. Un ou plusieurs supports de stockage d'informations lisibles par machine non transitoires comprenant une ou plusieurs instructions qui, lorsqu'elles sont exécutées par un ou plusieurs processeurs matériels, amènent :
la réception d'une pluralité d'attributs d'identité relatifs à une pluralité de fournisseurs de services cloud (CSP) associés à un environnement multicloud hétérogène ;
la génération d'un schéma d'identité relatif à chacun de la pluralité de CSP sur la base de la pluralité associée d'attributs d'identité en utilisant une technique de codage ;
l'identification d'une pluralité d'ensembles d'attributs relatifs à chacun de la pluralité de CSP sur la base du schéma d'identité généré, d'une pluralité de politiques, d'une pluralité de permissions et d'une pluralité de ressources associées à l'environnement multicloud hétérogène ;
la classification de la pluralité d'ensembles d'attributs relatifs à chacun de la pluralité de CSP dans l'un parmi a) une pluralité de paramètres d'informations d'identification personnelle (PII), b) une pluralité de paramètres cryptographiques et de sécurité et c) une pluralité de paramètres techniques sur la base d'une pluralité de métriques de confidentialité en utilisant un modèle auto-apprenant entraîné ;
la génération d'une pluralité d'ensembles d'attributs globaux en mettant en correspondance la pluralité classée d'ensembles d'attributs relatifs à chacun de la pluralité de CSP en utilisant l'un parmi (i) des modèles de mise en correspondance local-global prédéfinis et (ii) une mise en correspondance fournie par le modèle auto-apprenant entraîné ;
la génération d'une pluralité de tuples d'identité fusionnés en combinant la pluralité d'ensembles d'attributs globaux dans une pluralité de combinaisons, dans lequel chaque attribut parmi la pluralité d'ensembles d'attributs globaux est associé à un poids basé sur la confidentialité, dans lequel le poids basé sur la confidentialité est déterminé en utilisant le modèle auto-apprenant entraîné et mis à jour chaque fois qu'il y a un changement dans des informations cloud ;
le calcul d'un score de confiance basé sur une somme pondérée associé à chacun de la pluralité de tuples d'identité fusionnés, dans lequel le score de confiance basé sur une somme pondérée et la pluralité de tuples fusionnés sont réévalués dynamiquement chaque fois qu'il y a des changements dans au moins l'un parmi (i) les informations d'identité, (ii) les poids de confidentialité d'attribut et (iii) les attributs ; et
l'identification d'une pluralité optimale de tuples d'identité fusionnés parmi la pluralité de tuples d'identité fusionnés relatifs à chacun de la pluralité de CSP pour une gestion unifiée des identités et des accès sur la base du score de confiance basé sur une somme pondérée associé.

14. Un ou plusieurs supports de stockage d'informations lisibles par machine non transitoires selon la revendication 13, dans lequel la pluralité de paramètres PII comprend un nom d'utilisateur, un URL de photo de profil, un numéro de téléphone mobile personnel, un numéro de télécopie, un ID d'employé, un numéro de téléphone domestique, un numéro de téléphone de bureau.

15. Un ou plusieurs supports de stockage d'informations lisibles par machine non transitoires selon la revendication 13, dans lequel la pluralité de paramètres cryptographiques comprend des clés publiques et des certificats numériques, dans lequel la pluralité de paramètres techniques comprend un identifiant de courrier électronique, un identifiant d'utilisateur, un nom d'utilisateur et un protocole LDAP (Lightweight Directory Access Protocol), et dans lequel la pluralité de modèles de mise en correspondance local-global comprend une pluralité d'attributs spécifiques au cloud, une pluralité d'attributs cloud communs et une pluralité d'ensembles d'applications.
